# EUROPEAN PATENT SPECIFICATION

(11) **EP 2 427 306 B1**
(45) Date of publication and mention of the grant of the patent: **10.09.2014**
(21) Application number: 10718737.9
(22) Date of filing: 03.05.2010
(51) Int. Cl.: B25J 9/10, B25J 17/02, B25J 19/00

(54) **DELTA ROBOT**
DELTA ROBOTER
ROBOT DU TYPE DELTA

(30) Priority: 05.05.2009 NL 2002839
(43) Date of publication of application: 14.03.2012
(73) Proprietor: Penta Robotics Patents B.V., 3633 XX Vreeland (NL)
(72) Inventor: HERDER, Justus Laurens, NL-2595 ED Den Haag (NL); VAN DER WIJK, Volkert, NL-3405 CK Benschop (NL)
(74) Representative: Verhees, Godefridus Josephus Maria
(86) International application number: PCT/NL2010/050253
(87) International publication number: WO 2010/128849

(56) References cited:
- WO-A-99/27320
- DE-A1-102008 005 300
- FR-A- 2 690 372
- FR-A- 2 880 575
- GB-A- 2 143 498
- US-A1- 2005 252 329
- BARADAT ET AL: "Design and prototyping of a new balancing mechanism for spatial parallel manipulators" JOURNAL OF MECHANICAL DESIGN,, vol. 130, no. 7, 1 July 2008 (2008-07-01), pages 72305-1, XP009123750 cited in the application
- HERDER J L: "Some considerations regarding Statically Balanced Parallel Mechanisms (SBPM's)" PROCEEDINGS OF THE WORKSHOP ON FUNDAMENTAL ISSUES AND FUTURERESEARCH DIRECTIONS FOR PARALLEL MECHANISMS AND MANIPULATORS, XX, XX, 3 October 2002 (2002-10-03), pages 40-45, XP002332621

## Description

The invention relates to a delta robot comprising a stationary base and a movable platform that is connected to the base with three legs or - as they are also called - chains of links, and comprising a balancing system incorporating at least one pantograph for balancing the robot's center of mass.

FR-A-2 880 575 teaches a delta robot comprising a stationary base and a movable platform that is connected to the base with three chains of links, and comprising a balancing system incorporating a pantograph, wherein the pantograph has a first free extremity at which it supports a countermass.

Further a statically balanced delta robot is known from the article Design and prototyping of a new balancing mechanism for spatial parallel manipulators by C. Baradat et al., published in the 'Journal of Mechanical Design', July 2008, Vol. 130/072305-1-13. In this article it is mentioned that the delta robot was developed for high speed manipulation and that it is well-known in the electronics, food and pharmaceutical sectors as a reliable system with fast execution of light-duty tasks. However, in recent years much attention has been paid to a number of possible industrial applications, such as the manipulation of medical devices.

The said article provides a comprehensive overview of methods for statically balancing robot mechanisms for which purpose different balancing schemes can be applied, notably by using counterweights, by applying springs or by applying pneumatic or hydraulic cylinders, electromagnetic devices'etc.

The article focuses on a particular solution for the balancing of the robot incorporating for this purpose at least one pantograph that is mounted on a rotating stand that is connected with the base. At a position distant from the point where the pantograph mechanism is mounted to the rotating stand, the pantograph is connected to the moveable platform. Furthermore, the delta robot as suggested in the said article employs an actuator that produces a vertical force that is used for balancing the gravitational forces of the robot.

It is an object of the invention to provide a delta robot according to the preamble which is devoid of any active system embodied as actuators as proposed by said article, yet allows that the robot will be able to move rapidly and accurately and have a range of motion which answers to the needs as they may arise in the above-mentioned applications.

As a general objective of the invention it is intended to provide an alternative to existing solutions for balancing the robot in a manner that the reaction forces that occur during operation of the delta robot are effectively avoided. Such a robot is not only statically balanced but also force-balanced. A further objective is that vibrations that would result from imbalances in the construction of the robot, are prevented, which vibrations might otherwise deteriorate the operational accuracy of the delta robot. The avoidance of vibrations also results in less noise, and reduced wear.

It is expressly remarked that wherever in the description mention is made to the moveable platform, this platform is deemed to include the situation that the platform supports an instrument. The mass of the instrument is then deemed concentrated in the mass of the said platform. Further it is remarked that wherever in the description mention is made of balancing a particular item, this should be understood as providing an equilibrium to such item. Consequently wherever the word <balancing> occurs in the description, this word can be replaced by <providing an equilibrium to> and vice versa. The same applies to the verb <to balance> which can be replaced by <to provide equilibrium to> and vice versa.

From the article Design and prototyping of a new balancing mechanism for spatial parallel manipulators by C. Baradat et al., published in the 'Journal of Mechanical Design', July 2008, Vol. 130/072305-1-13 the preamble of the independent claims 1 and 3 is known, notably that the at least one pantograph has a first free extremity at which it supports a countermass which is arranged to balance the center of mass of the robot.

The objectives of the invention are entirely or in part achieved with a delta robot that in accordance with the invention is characterized by one or more of the appended claims.

The invention is based on the insight that the dynamic reaction forces that occur during operation of the delta robot will be zero if the center of mass of the robot is made stationary for any motion of the robot mechanism.

A first possible embodiment of the delta robot of the invention has the features that the at least one pantograph has a second extremity distant from the first extremity, which second extremity is connected at a preselected position with connectors to the respective legs or chains of links connecting the platform with the base, whereby said position of the second extremity is arranged to coincide with the original center of mass of the robot. The "original center of mass" herein refers to the center of mass of the moving elements of the robot before balancing.

A simpler and therefore more preferred embodiment that embodies the invention has the features that the three links that connect to the base are individually balanced with countermasses positioned at arms extending from said links beyond hinges for coupling said links to the base, and that the at least one pantograph has a second extremity distant from the first extremity, which second extremity connects to the platform so as to balance said platform and at least part of the chains of links connecting said platform to the base.

A further preferred embodiment of the delta robot of the invention has the features that it is provided with three pantographs each pantograph being partly coinciding with one of the three chains of links and each one of the three chains of links partly coinciding with one of the pantographs such that for each of the chains of links and for each corresponding pantograph there is an arm of the pantograph that extends parallel to a link of the chains of legs connecting to the base, wherein said arm supports a countermass and wherein each countermass is positioned to balance its chain of links and a one third part of the platform. This embodiment is preferred in view of its symmetrical design characteristics which makes it easy to employ with a particular delta robot.

In terms of the number of parts to be employed being very limited the delta robot of the invention is preferably arranged such that part of the at least one pantograph is a first link of a first chain of links, whereby the first link connects to the base, and that the said first free extremity of the pantograph supporting the countermass is provided on a first arm of the pantograph which runs parallel to said first link, whereby said first arm connects with a hinge distant from the countermass to a second arm of the pantograph, which second arm is arranged as an extension of a second link of said first chain of links, which second link connects to the platform, and wherein the countermass balances at least part of the platform, and at least part of the legs or chains of links connecting the platform to the base.

In this construction of the delta robot there again is only one pantograph needed for supporting a countermass.

Preferably, the latter two embodiments of the delta robot according to the invention can be further characterized in that same is provided with two further countermasses, to balance at least part of a second and a third chain of links. As already mentioned it is possible that the two further countermasses as just mentioned are supported by two further pantographs in order to realise the above-mentioned embodiment having the symmetrical construction.

To simplify the design it may however be preferable that each of the two further countermasses is individually provided on a supporting arm which is arranged as an extension beyond a hinge of the link forming part of the second or third chain of links that connects at said hinge to the base.

The invention will hereinafter be further elucidated with reference to the drawing of several embodiments of the delta robot of the invention.

In the drawing:
- Fig. 1 shows a first embodiment of the delta robot of the invention;
- Fig. 2 shows a second embodiment of the delta robot of the invention;
- Fig. 3 shows a third embodiment of the delta robot of the invention,
- Fig. 4 shows a fourth embodiment of the delta robot of the invention, and
- Fig. 5 shows the fifth embodiment of the delta robot of the invention forming a variation to the fourth embodiment shown in figure 4.

Wherever in the figures the same reference numerals are applied, these numerals refer to the same parts.

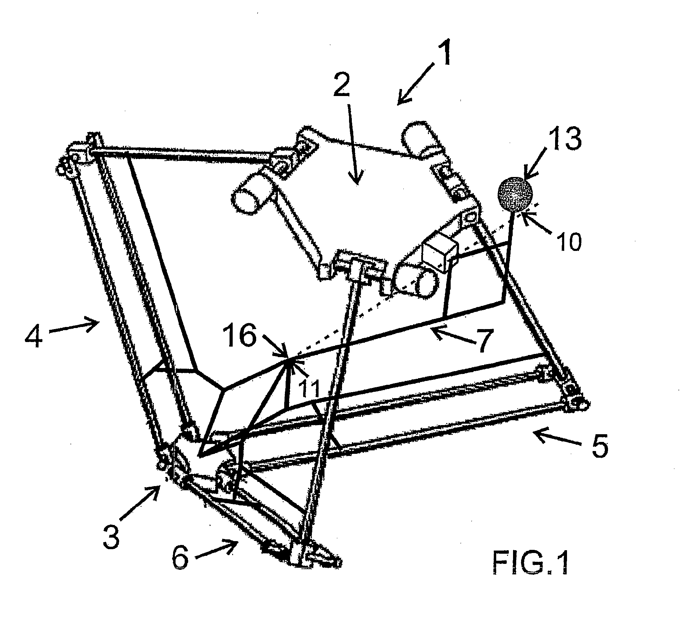

Throughout the figures 1-5 reference numeral 1 is applied to refer to the integral delta robot of the invention. This delta robot 1 comprises a stationary base 2 and a moveable platform 3. The moveable platform 3 may or may not be embodied with a further device, whereby said device may be manipulated with the delta robot 1 into a desired position. The platform 3 as shown in the figures is deemed to include such a device. At least the mass of such a device is deemed comprised in the mass of the platform 3 for the purpose of the following elucidation.

The platform 3 is connected to the base 2 with three legs or chains of links 4, 5 and 6 and comprises a balancing system incorporating at least one pantograph 7, 8, 9 for force-balancing the centre of mass of the delta robot 1.

With reference now in particular to Fig. 1, a first embodiment is shown in which the applied pantograph 7 has a first free extremity 10 at which it supports a countermass 13 which is arranged to balance the center of mass 16 of the robot. For this purpose the pantograph 7 has a second extremity 11, which is distant from the first extremity 10 and at which second extremity 11 the pantograph 7 is connected with connectors (as the figure clearly shows) to the respective chains of links 4, 5, 6 connecting the platform 3 with the base 2. The position of the second extremity 11 is arranged to coincide with the original center of mass 16 of the robot 1, which is the center of mass before providing the balancing mechanism.

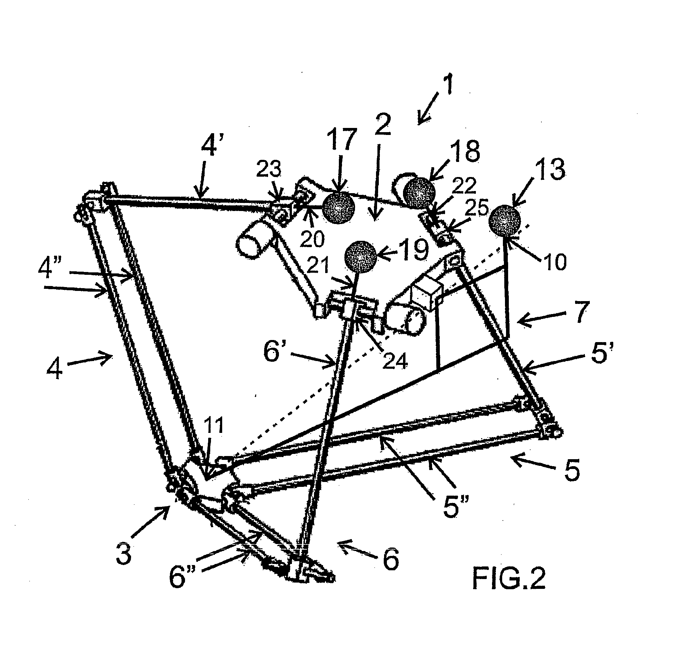

A second embodiment is shown in Fig. 2 in which the three links 4', 5' and 6' that connect to the base 2 and part of the mass of the three links 4", 5", 6" connecting to the platform 3, are individually balanced with countermasses 17, 18, 19. These countermasses 17, 18, 19 are positioned at arms 20, 21, 22 that extend from said links 4', 5', 6' beyond hinges 23, 24, 25 that are applied for coupling the links 4', 5', 6' to the base 2.

Further, Fig. 2 shows that the pantograph 7 again has a second extremity 11 which is distant from the first extremity 10 that supports the countermass 13, and which second extremity 11 connects to the platform 3 so as to balance the platform and the yet unbalanced part of the legs 4, 5, 6 (i.e. a part of the claims of links 4, 5, 6) that connect the platform 3 to the base 2.

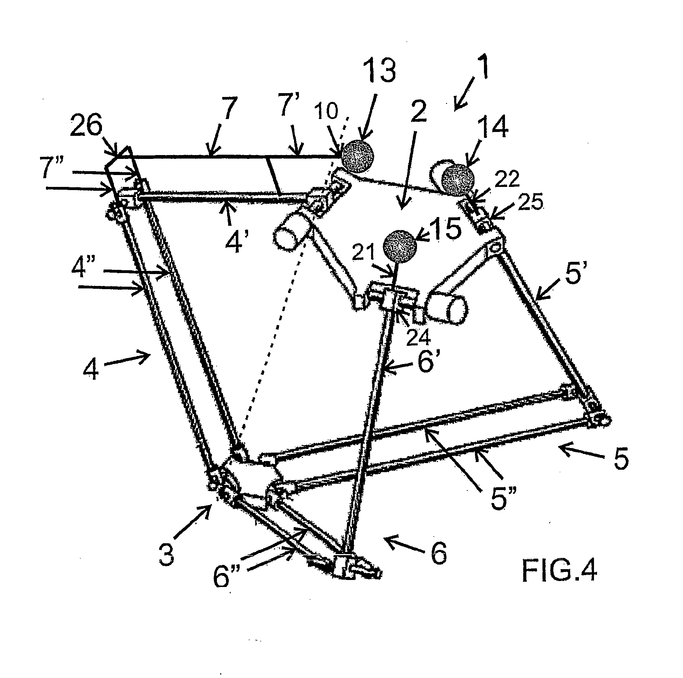

Making further reference to Fig. 4 an embodiment is shown in which part of the pantograph 7 is a first link 4' of a first chain of links 4 whereby the first link 4' connects to the base 2. The first free extremity 10 of the pantograph 7 supporting the countermass 13 is provided on a first arm 7' of the pantograph 7, which runs parallel to the first link 4', and this first arm 7' connects with a hinge 26 distant from the countermass 13 to a second arm 7" of the pantograph 7. This second arm 7" of the pantograph 7 is thereby arranged as an extension of a second link 4" of the first chain of links 4, whereby the second link 4" connects to the platform 3. In this construction the countermass 13 balances the complete leg or chain of links 4 connecting the platform 3 to the base 2, the platform 3 and part of the links 5" and 6'' connected to the platform 3. Furthermore, this embodiment is provided with two further countermasses 14, 15, which are intended to balance at least part of the second and third chain of links 5, 6, notably to balance the links 5', 6' and part of the links 5", 6".

As Fig. 4 clearly shows, each of the two further countermasses 14, 15 is individually provided on a supporting arm 21, 22, which is arranged as an extension beyond a hinge 24, 25 of the link 5', 6' forming part of the second or third chain of links 5, 6 that connects at said hinge 24, 25 to the base 2.

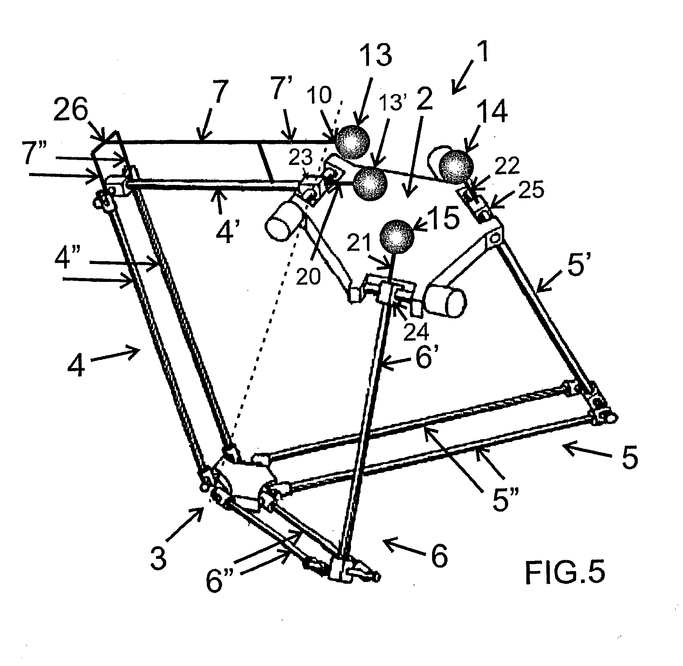

Figure 5 shows a variation to the embodiment shown in figure 4 in that it has a further countermass 13' which is provided on a supporting arm 20 which is arranged as an extension beyond a hinge 23 of the link 4' forming part of the first chain of links 4 that connects at said hinge 23 to the base 2. In this embodiment the mass of countermass 13 can be advantageously reduced as compared to the mass of countermass 13 as applied in the embodiment shown in figure 4.

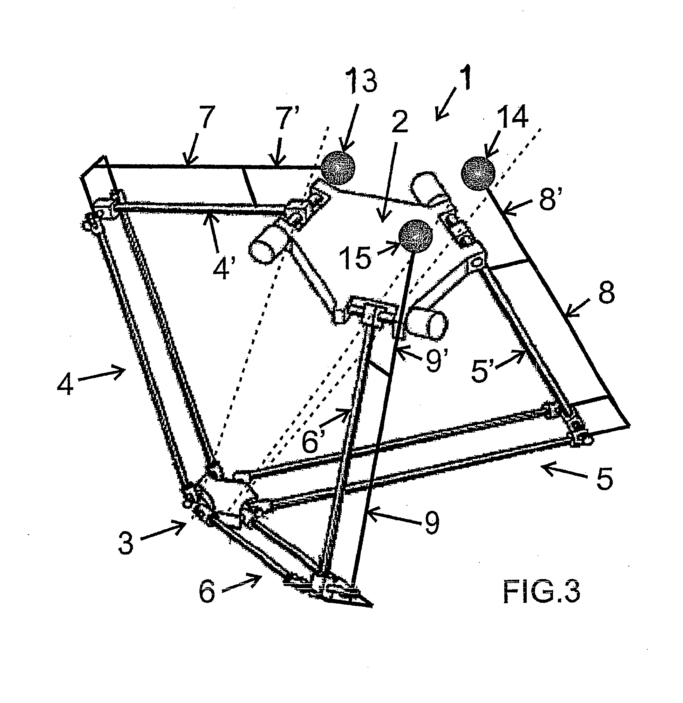

Finally, with reference to Fig. 3 an embodiment is shown of the delta robot 1 of the invention, which is provided with three pantographs 7, 8, 9, wherein each pantograph 7, 8, 9 is partly coinciding with one of the three chains of links 4, 5, 6 and each one of the three chains of links 4, 5, 6 is partly coinciding with one of the said pantographs 7, 8, 9. This is embodied in a manner that for each of the chains of links 4, 5, 6 and for each corresponding pantograph 7, 8, 9 there is an arm 7', 8', 9' of the pantograph 7, 8, 9 that extends parallel to a link 9' , 5', 6' of the chains of links 4, 5, 6 connecting to the base 2.

Each of said arms 7', 8', 9' thereby supports a countermass 13, 14, 15, whereby each countermass 13, 14, 15 is positioned to balance its chain of links 4, 5, 6 and a one third part of the platform 3.

## Claims

1. Delta robot (1) comprising a stationary base (2) and a movable platform (3) that is connected to the base (2) with three chains of links (4, 5, 6), and comprising a balancing system incorporating at least one pantograph (7, 8, 9) for providing an equilibrium to the robot's center of mass, wherein the at least one pantograph has a first free extremity (10) at which it supports a countermass (13) which is arranged to balance so as to provide an equilibrium to the center of mass (16) of the robot, **characterized in that** the at least one pantograph (7) has a second extremity (11) distant from the first extremity (10), which second extremity (11) is connected at a preselected position with connectors to the respective chains of links (4, 5, 6) connecting the platform (3) with the base (2), whereby said position is arranged to coincide with the original center of mass (16) of the robot (1).

2. Delta robot (1) according to claim 1, **characterized in that** the three links (4', 5', 6') that connect to the base (2) are individually balanced with countermasses (17, 18, 19) positioned at arms (20, 21, 22) extending from said links (4', 5', 6') beyond hinges (23, 24, 25) for coupling said links (4', 5', 6') to the base (2), and that the at least one pantograph (7) has a second extremity (11) distant from the first extremity (10), which second extremity (11) connects to the platform (3) so as to balance for providing an equilibrium to said platform and at least part of the chains of links (4, 5, 6) connecting said platform (3) to the base (2).

3. Delta robot (1) comprising a stationary base (2) and a movable platform (3) that is connected to the base (2) with three chains of links (4, 5, 6), and comprising a balancing system incorporating at least one pantograph (7, 8, 9) for providing an equilibrium to the robot's center of mass, wherein the at least one pantograph has a first free extremity (10) at which it supports a countermass (13) which is arranged to balance so as to provide an equilibrium to the center of mass (16) of the robot, **characterized in that** part of the at least one pantograph (7) is a first link (4') of a first leg or chain of links (4), whereby the first link (4') connects to the base (2), and that the said first free extremity of the pantograph (7) supporting the countermass (13) is provided on a first arm (7') of the pantograph (7) which runs parallel to said first link (4'), whereby said first arm (7') connects with a hinge (26) distant from the countermass (13) to a second arm (7'') of the pantograph (7), which second arm (7'') is arranged as an extension of a second link (4'') of said first chain of links (4), which second link (4'') connects to the platform, and wherein the countermass (13) balances at least part of the platform (3) and at least part of the legs (4, 5, 6) connecting the platform (3) to the base (2).

4. Delta robot (1) according to claim 3, **characterized in that** same is provided with two further countermasses (14, 15), to balance at least part of a second and a third chain of links (5, 6).

5. Delta robot (1) according to claim 4, **characterized in that** each of the two further countermasses (14, 15) is individually provided on a supporting arm (21, 22) which is arranged as an extension beyond a hinge (24, 25) of the link (5', 6') forming part of the second or third chain of links (5, 6) that connects at said hinge (24, 25) to the base (2).

6. Delta robot (1) according to one of claims 3-5, **characterized in that** it has a further countermass (13') which is provided on a supporting arm (20) which is arranged as an extension beyond a hinge (23) of the link (4') forming part of the first chain of links (4) that connects at said hinge (23) to the base (2).

7. Delta robot (1) according to claim 1, 3 or 4, **characterized in that** it is provided with three pantographs (7, 8, 9) each pantograph (7, 8, 9) being partly coinciding with one of the three chains of links (4, 5, 6) and each one of the three chains of links (4, 5, 6) partly coinciding with one of the pantographs (7, 8, 9) such that for each of the chains of links (4, 5, 6) and for each corresponding pantograph (7, 8, 9) there is an arm (7', 8', 9') of the pantograph (7, 8, 9) that extends parallel to a link (4', 5', 6') of the chains of links (4, 5, 6) connecting to the base (2), wherein said arm (7', 8', 9') supports a countermass (13, 14, 15) and wherein each countermass is positioned to balance its chain of links (4, 5, 6) and a one third part of the platform (3).

## Patentansprüche

1. Delta-Roboter (1) mit einer stationären Basis (2) und einer beweglichen Plattform (3), die mit drei Kupplungsketten (4, 5, 6) mit der Basis (2) verbunden ist, und mit einem Ausgleichssystem mit mindestens einem Pantographen (7, 8, 9) zum Ausbalancieren des Massenmittelpunkts des Roboters, wobei mindestens ein Pantograph ein erstes freies Endstück (10) hat, an dem dieser ein Gegengewicht (13) stützt, das eingerichtet ist, um den Massenmittelpunkt (16) des Roboters auszubalancieren, **dadurch gekennzeichnet, dass** mindestens ein Pantograph (7) ein vom ersten Endstück (10) entferntes zweites Endstück (11) besitzt, das an einer vorab bestimmten Position mit Verbindungsgliedern zu den Kupplungsketten (4, 5, 6) verbunden ist, die die Plattform (3) mit der Basis (2) verbinden, wobei die genannte Position eingerichtet ist, um mit dem originalen Massenmittelpunkt (16) des Roboters (1) zusammenzulaufen.

2. Delta-Roboter (1) nach Anspruch 1, **dadurch gekennzeichnet, dass** die drei Kupplungen (4', 5', 6'), die mit der Basis (2) verbunden sind, einzeln mit Gegengewichten (17, 18, 19) ausbalanciert sind, die an Armen (20, 21, 22) in Verlängerung der Kupplungen (4', 5', 6') positioniert sind, entlang von Drehgelenken (23, 24, 25) zum Verbinden der Kupplungen (4', 5', 6') mit der Basis (2), und dass mindestens ein Pantograph (7) ein zweites vom ersten Endstück (10) entferntes Endstück (11) hat, das mit der Plattform (3) zum Ausbalancieren der Plattform verbunden ist und mindestens Teil der Kupplungsketten (4, 5, 6), die die Plattform (3) mit der Basis (2) verbinden, ausbalanciert.

3. Delta-Roboter (1) mit einer stationären Basis (2) und einer beweglichen Plattform (3), die mit drei Kupplungsketten (4, 5, 6) mit der Basis (2) verbunden ist, und mit einem Ausgleichssystem mit mindestens einem Pantograph (7, 8, 9) zum Ausbalancieren des Massenmittelpunktes des Roboters, wobei mindestens ein Pantograph ein erstes freies Endstück (10) hat, an dem dieser ein Gegengewicht (13) stützt, das eingerichtet ist, um den Massenmittelpunkt (16) des Roboters auszubalancieren, **dadurch gekennzeichnet, dass** ein Teil von mindestens einem Pantographen (7) eine erste Kupplung (4') von einem ersten Bein oder einer Kupplungskette (4) ist, wobei die erste Kupplung (4') mit der Basis (2) verbunden ist, und das erste freie Ende des Pantographen (7) ein Gegengewicht (13) auf einem ersten Arm (7') des Pantographen (7) stützt, der parallel zur ersten Kupplung (4') verläuft, wobei der erste Arm (7') mit einem vom Gegengewicht (13) entfernten Drehgelenk (26) mit einem zweiten Arm (7") des Pantographen (7) verbunden ist, welcher zweite Arm (7") als ein Ausläufer der zweiten Kupplung (4") von der ersten Kupplungskette (4) eingerichtet ist, welche zweite Kupplung (4") mit der Plattform verbunden ist und wo das Gegengewicht (13) zum Mindesten einen Teil der Plattform (3) und zum Mindesten einen Teil der Beine (4, 5, 6), die die Plattform (3) mit der Basis (2) verbinden, ausbalanciert.

4. Delta-Roboter (1) nach Anspruch 3, **dadurch gekennzeichnet, dass** dieser mit zwei weiteren Gegengewichten (14, 15) zum Ausbalancieren von zumindest einem Teil einer zweiten und dritten Kupplungskette (5, 6) ausgestattet ist.

5. Delta-Roboter (1) nach Anspruch 4, **dadurch gekennzeichnet, dass** jedes der zwei weiteren Gegengewichte (14, 15) sich einzeln auf einem Stützarm (21, 22) befindet, der als Ausweitung entlang einem Drehgelenk (24, 25) der Kupplung (5', 6') eingerichtet ist als Teil der zweiten oder dritten Kupplungskette (5, 6), die bei dem Drehgelenk (24, 25) mit der Basis (2) verbunden ist.

6. Delta-Roboter (1) nach einem der Ansprüche 3-5, **dadurch gekennzeichnet, dass** dieser ein weiteres Gegengewicht (13') auf einem Stützarm (20) besitzt, der als Ausweitung entlang einem Drehgelenk (23) der Kupplung (4') eingerichtet ist als Teil der ersten Kupplungskette (4), die bei dem Drehgelenk (23) mit der Basis (2) verbunden ist.

7. Delta-Roboter (1) nach Anspruch 1, 3 oder 4, **dadurch gekennzeichnet, dass** dieser drei Pantographen (7, 8, 9) hat, wobei jeder Pantograph (7, 8, 9) zum Teil mit einer der drei Kupplungsketten (4, 5, 6) zusammenläuft und jede der drei Kupplungsketten (4, 5, 6) zum Teil mit einem der Pantographen (7, 8, 9) so zusammenläuft, dass für jede der Kupplungsketten (4, 5, 6) und für jeden entsprechenden Pantographen (7, 8, 9) ein Arm (7', 8', 9') des Pantographen (7, 8, 9) vorhanden ist, der parallel einer Kupplung (4', 5', 6') der Kupplungsketten (4, 5, 6) verläuft, die mit der Basis (2) verbunden sind, wobei jeder Arm (7', 8', 9') ein Gegengewicht (13, 14, 15) stützt und jedes Gegengewicht positioniert ist, um dessen Kupplungskette (4, 5, 6) und einen Teil der Plattform (3) auszubalancieren.

## Revendications

1. Robot Delta (1) comprenant une base stationnaire (2) et une plateforme mobile (3) reliée à la base (2) au moyen de trois chaînes d'accouplements (4, 5, 6) et comprenant un système d'équilibrage ayant au moins un pantographe (7, 8, 9) pour équilibrer le barycentre du robot, où ledit pantographe a une première extrémité (10) libre où il soutient un contrepoids (13) étant conçu afin de maintenir en équilibre le barycentre (16) du robot, **caractérisé en ce que** ledit pantographe (7) possède une deuxième extrémité (11) éloignée de la première extrémité (10), laquelle deuxième extrémité (11) est reliée, en un endroit défini à l'avance, à des connecteurs allant vers les chaînes d'accouplements respectives (4, 5, 6) reliant la plateforme (3) à la base (2), où l'endroit nommé est conçu afin de coïncider avec le barycentre original (16) du robot (1).

2. Robot Delta (1) selon la revendication 1, **caractérisé en ce que** les trois accouplements (4', 5', 6') qui sont reliés à la base (2) sont individuellement maintenus en équilibre grâce à des contrepoids (17, 18, 19) qui sont positionnés sur des bras (20, 21, 22) au-delà de charnières (23, 24, 25) dans le prolongement des accouplements nommés (4', 5', 6'), pour accoupler les accouplements nommés (4', 5', 6') avec la base (2), et **en ce que** ledit pantographe (7) a une deuxième extrémité (11), éloignée de la première extrémité (10), laquelle deuxième extrémité (11) est reliée à la plateforme (3) pour équilibrer la plateforme nommée et au moins une partie de la chaîne d'accouplements (4, 5, 6) reliant la plateforme (3) à la base (2).

3. Robot Delta (1) comprenant une base stationnaire (2) et une plateforme mobile (3) reliée à la base (2) au moyen de trois chaînes d'accouplements (4, 5, 6) et comprenant un système d'équilibrage ayant au moins un pantographe (7, 8, 9) pour équilibrer le barycentre du robot, où ledit pantographe a une première extrémité (10) libre où il soutient un contrepoids (13) étant conçu afin de maintenir en équilibre le barycentre (16) du robot, **caractérisé en ce qu'**une partie dudit pantographe (7) est un premier accouplement (4') d'une première branche ou chaîne d'accouplements (4), où le premier accouplement (4') est accouplé à la base (2), et **en ce que** la première extrémité libre nommée du pantographe (7) soutient un contrepoids (13) se trouvant sur un premier bras (7') du pantographe (7) lequel s'étend parallèlement au premier accouplement nommé (4'), où le premier bras (7') est relié à un deuxième bras (7") du pantographe (7) au moyen d'une charnière (26) éloignée du contrepoids (13), lequel deuxième bras (7") constitue une prolongation du deuxième accouplement (4") de la première chaîne d'accouplements nommée (4), lequel deuxième accouplement (4") est accouplé à la plateforme et où le contrepoids (13) maintient en équilibre au moins une partie de la plateforme (3) et au moins une partie des branches (4, 5, 6) reliant la plateforme (3) à la base (2).

4. Robot Delta (1) selon la revendication 3, **caractérisé en ce que** celui-ci est pourvu de deux contrepoids supplémentaires (14, 15) pour équilibrer au moins une partie d'une deuxième et troisième chaîne d'accouplements (5, 6).

5. Robot Delta (1) selon la revendication 4, **caractérisé en ce que** chacun des deux contrepoids supplémentaires (14, 15) se trouve individuellement sur un bras de suspension (21, 22), lequel bras de suspension est conçu comme une extension, au-delà d'une charnière (24, 25), de l'accouplement (5', 6') qui forme une partie de la deuxième ou troisième chaîne d'accouplements (5, 6) étant accouplée, au niveau de la charnière nommée (24, 25), à la base (2).

6. Robot Delta (1) selon une des revendications 3 à 5, **caractérisé en ce que** celui-ci est pourvu d'un contrepoids supplémentaire (13') qui se trouve sur un bras de suspension (20) lequel est conçu comme une extension, au-delà d'une charnière (23), de l'accouplement (4') qui forme une partie de la première chaîne d'accouplements (4) étant accouplée, au niveau de la charnière nommée (23), à la base (2).

7. Robot Delta (1) selon la revendication 1, 3 ou 4, **caractérisé en ce que** celui-ci est pourvu de trois pantographes (7, 8, 9), où chaque pantographe (7, 8, 9) coïncide partiellement avec l'une des trois chaînes d'accouplements (4, 5, 6) et chacune des trois chaînes d'accouplements (4, 5, 6) coïncide partiellement avec l'un des pantographes (7, 8, 9), de telle sorte qu'il y a pour chacune des chaînes d'accouplements (4, 5, 6) et pour chaque pantographe correspondant (7, 8, 9) un bras (7', 8', 9') du pantographe (7, 8, 9) qui s'étend parallèlement à un accouplement (4', 5', 6') des chaînes d'accouplements (4, 5, 6) étant reliées à la base (2), où chaque bras (7', 8', 9') soutient un contrepoids (13, 14, 15) et où chaque contrepoids est positionné afin de maintenir en équilibre sa chaîne d'accouplements (4, 5, 6) et une troisième partie de la plateforme (3).
